# EUROPEAN PATENT APPLICATION

(11) **EP 4 336 647 A1**
(43) Date of publication of application: **13.03.2024**
(21) Application number: 22841454.6
(22) Date of filing: 14.07.2022
(51) Int. Cl.: H01M 50/54, H01M 50/533, H01M 50/536

(54) **CONNECTING MEMBER, BATTERY CELL AND BATTERY PACK**

(30) Priority: 14.07.2021 CN 202110798109; 14.07.2021 CN 202110798365; 14.07.2021 CN 202110803671; 14.07.2021 CN 202110798364; 14.07.2021 CN 202121603793 U; 14.07.2021 CN 202121602695 U; 14.07.2021 CN 202121602817 U; 14.07.2021 CN 202121603554 U
(71) Applicant: Xiamen Hithium Energy Storage Technology Co., Ltd., Xiamen, Fujian 361006 (CN)
(72) Inventor: ZHOU, Long, Xiamen, Fujian 361006 (CN); WU, Congmiao, Xiamen, Fujian 361006 (CN); GUO, Min, Xiamen, Fujian 361006 (CN); LAN, Jinhua, Xiamen, Fujian 361006 (CN)
(74) Representative: Manitz Finsterwald Patent- und Rechtsanwaltspartnerschaft mbB
(86) International application number: PCT/CN2022/105675
(87) International publication number: WO 2023/284821

(57) **Abstract**

Provided are a connector (100), a battery cell (1000), and a battery pack. The connector (101) is configured to electrically connect a plurality of layers of tabs (20211) of an electrode plate (2021). The connector (101) includes a connection plate (1011) and a protrusion (1012) arranged at the connection plate. The protrusion (1012) protrudes from a side surface of the connection plate (1011) in a thickness direction of the connection plate, and is configured to penetrate the plurality of layers of tabs (20211).

## Description

### PRIORITY INFORMATION

The present application claims priority to and benefits of Chinese Patent Application No. 202110798109.4, No. 202110798364.9, No. 202110798365.3, No. 202110803671.1, No. 202121603793.8, No. 202121602695.2, No. 202121602817.8, and No. 202121603554.2, filed with China National Intellectual Property Administration on July 14, 2021, the entire disclosure of which are incorporated herein by reference.

### FIELD

The present disclosure relates to the field of battery technologies, and more particularly, to a connector, a battery cell, and a battery pack.

### BACKGROUND

In the related art, a single layer of tab is welded at two sides of a composite tab with copper foils through ultrasonic roll welding, and the welded copper foils are then welded onto a flexible connector. In this welding manner, each layer of the tab needs to be welded, and therefore welding cost and material cost of the copper foils are increased.

### SUMMARY

The present disclosure aims to solve at least one of the technical problems in the related art. To this end, the present disclosure aims to provide a connector, a battery cell, and a battery pack. The connector is ingeniously designed to reduce difficulty of welding tabs.

The present disclosure further provides a battery cell.

The present disclosure further provides a battery pack.

In a connector according to the present disclosure, the connector is configured to electrically connect a plurality of layers of tabs of an electrode plate, and the connector includes a connection plate and a protrusion arranged at the connection plate. The protrusion protrudes from a side surface of the connection plate in a thickness direction of the connection plate, and is configured to penetrate the plurality of layers of tabs.

In the above-mentioned connector, the connector can be easily connected to the tabs by arranging the protrusion at the connector. Therefore, difficulty of welding the tabs is reduced. Thus, a welding process from an operator is simplified. As a result, a manufacturing time is reduced with lowered labor cost. In addition, connection strength between the tabs and the connector is enhanced. In this way, the connection is stable, which ensures reliability of the battery cell.

In a connector according to one embodiment of the present disclosure, the connection plate is provided with a plurality of protrusions arranged at intervals on the connection plate and penetrating the plurality of layers of tabs.

In some embodiments, the connection plate and the plurality of protrusions are integrally formed.

In some embodiments, the plurality of protrusions is connected to the connection plate through welding, bonding plugging or snapping.

In some embodiments, the connector further includes a protruding plate fixed at the connection plate. The plurality of protrusions is arranged at a side of the protruding plate facing away from the connection plate.

In some embodiments, the plurality of protrusions is arranged at the side surface of the connection plate in a matrix pattern.

Further, the protrusion extends on the side surface of the connector plate along a straight and/or curved line.

Further, the protrusion has a width ranging from 0.1 mm to 3 mm.

Further, the protrusion has a circular, elliptical or polygonal cross section perpendicular to a protruding height.

Further, the protrusion protrudes from the connection plate by a height ranging from 0.1 mm to 3 mm.

Further, the connection plate and the protrusion are made of a same material.

In a connector according to one embodiment of the present disclosure, an end of the protrusion away from the connection plate is formed as a piercing end configured to pierce the plurality of layers of tabs.

With the connector of the present disclosure, by arranging the protrusion with the piercing end at the connector, the piercing end can easily pierce the plurality of layers of tabs, and welding energy can thus easily pass through the connector and the plurality of layers of tabs. Therefore, the difficulty of welding the tabs is reduced. Thus, the welding process for the operator is simplified. As a result, the manufacturing time is reduced with the lowered labor cost. In addition, the connection strength between the tabs and the connector is enhanced. In this way, the connection is stable, which ensures the reliability of the battery cell.

In some embodiments, the protrusion is formed into a conical protrusion having a cone apex angle greater than 5° and less than 150°.

In some embodiments, the protrusion is formed into a truncated conical protrusion. A ratio of a radius of a top surface to a radius of a bottom surface of the truncated conical protrusion is less than or equal to 0.6.

In some embodiments, the protrusion extends on the side surface of the connector plate along a straight and/or curved line.

In some embodiments, a cross section of the protrusion perpendicular to an extending direction of the protrusion is formed into a triangular shape. An angle of the piercing end is less than or equal to 120° in the cross section of the protrusion perpendicular to the extending direction.

In some embodiments, a cross section of the protrusion perpendicular to an extending direction of the protrusion is formed into a trapezoidal shape. A ratio of an upper side to a lower side of the cross section of the protrusion perpendicular to the extending direction is less than or equal to 0.6.

In some embodiments, the protrusion includes a connection segment and a piercing segment connected to the connection segment in a height direction of the protrusion. The connection segment is connected to the connection plate. The piercing segment is connected to an end of the connection segment facing away from the connection plate. The connection segment has a constant cross sectional area in the height direction of the protrusion. The piercing segment is formed as the piercing end.

In some embodiments, the protrusion has a height less than or equal to 5 mm.

In some embodiments, the height of the piercing segment is less than or equal to 2 mm in the height direction of the protrusion.

In some embodiments, in the height direction of the protrusion: a cross sectional area of the piercing segment gradually decreases, and an apex angle of the piercing segment is less than or equal to 120°.

In some embodiments, a smooth transition is formed between the connection segment and the piercing segment.

In a connector according to one embodiment of the present disclosure, the connection plate is provided with a plurality of protrusions arranged on the connection plate at intervals and penetrating the plurality of layers of tabs. A free end surface of the protrusion is formed as a flat surface in a height direction of the protrusion.

With the connector according to the present disclosure, by arranging the protrusion having the flat top end surface, the protrusion can easily pierce through the plurality of layers of tabs, and the welding energy can thus easily pass through the connector and the plurality of layers of tabs. Therefore, the difficulty of welding the tabs is reduced. Thus, the welding process from the operator is simplified. As a result, the manufacturing time is reduced with the lowered labor cost. In addition, the connection strength between the tabs and the connector is enhanced, which ensures the reliability of the battery cell. In this way, a failure rate is reduced. Therefore, a safety factor of the battery cell is improved, which ensures use safety of the battery cell. Thus, a potential safety hazard is avoided with a reduction in occurrence of dangerous accident.

In some embodiments, the protrusion has a constant cross sectional area in the height direction of the projection.

In some embodiments, the cross sectional area of the protrusion is less than or equal to 5 mm²

In some embodiments, a cross section of the protrusion perpendicular to a height of the protrusion is in a circular, elliptical or polygonal shape.

Further, a ratio of the cross sectional area of the protrusion to the height of the protrusion is less than or equal to 5.

Further, the cross section of the protrusion is formed into the circular shape, and the protrusion has a radius less than or equal to 3 mm.

Further, the cross section of the protrusion is formed into a square shape, and a length of each side of the cross section of the protrusion is less than or equal to 3 mm.

Further, a ratio of the length of each side of the cross section of the protrusion to the height of the protrusion is less than or equal to 1.

A connector according to one embodiment of the present disclosure is configured to be connected to the plurality of layers of tabs through ultrasonic welding. The connection plate is provided with a plurality of protrusions penetrating the plurality of layers of tabs and arranged more densely in an ultrasonic vibration direction than in directions other than the ultrasonic vibration direction.

In the connector according to the present disclosure, by arranging the plurality of protrusions more densely in the ultrasonic vibration direction than in the directions rather than the ultrasonic vibration direction, welding speed between the tabs and the connector is improved. Therefore, the manufacturing time is reduced. Thus, production cost of the battery cell is lowered. As a result, production efficiency of the battery pack is improved.

In some embodiments, a spacing between two adjacent protrusions in the ultrasonic vibration direction is L1, and a spacing between two adj acent protrusions in a direction perpendicular to the ultrasonic vibration direction is L2, where L1 and L2 satisfy 0.5mm≤L1≤10mm, 0.5mm≤L2≤10mm, and L1≤L2.

Further, the plurality of protrusions extends on the side surface of the connection plate in the ultrasonic vibration direction, and is arranged at intervals in the direction perpendicular to the ultrasonic vibration direction.

Further, the spacing L2 between the two adjacent protrusions in the direction perpendicular to the ultrasonic vibration direction is greater than or equal to a width d of the protrusion.

Further, a length of the protrusion in the ultrasonic vibration direction is L, and a width of the protrusion in the direction perpendicular to the ultrasonic vibration direction is d, where L and d satisfy L*2+d*2≥X/4, wherein X represents a width of each of the tabs.

A battery cell according to one embodiment of the present disclosure includes an electrode plate and and an electrically conductive connection assembly. The electrode plate includes a plurality of tabs stacked together and a current collector. The electrically conductive connection assembly includes the connector according to the above embodiment. The connector is provided with a plurality of protrusions penetrating and electrically connected to the plurality of layers of tabs.

In the battery cell according to the present disclosure, by applying the electrically conductive connection assembly with the above-mentioned connector according to the above embodiment to the battery cell, difficulty of assembling the battery cell is reduced. Therefore, a manufacturing time of the battery cell is reduced with the lowered labor cost. Thus, the reliability of the battery cell is ensured.

In some embodiments, the electrode plate includes a support insulation layer, and a first electrically conductive layer and a second electrically conductive layer that respectively cover two side surfaces of the support insulation layer in a thickness direction of the support insulation layer.

A battery pack according to one embodiment of the present disclosure includes the battery cell according to the above embodiment of the present disclosure.

The battery pack according to the present disclosure, by arranging the battery cell according to the above embodiment, safety performance of the battery pack is improved. Therefore, the reliability of the battery pack is ensured to avoid occurrence of danger.

Additional aspects and advantages of the embodiments of present disclosure will be provided at least in part in the following description, or will become apparent in part from the following description, or can be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings, in which:
FIG. 1 is a schematic view of an electrically conductive connection assembly according to an embodiment of the present disclosure.
FIG. 2 is a schematic side view of the electrically conductive connection assembly illustrated in FIG. 1.
FIG. 3 is a schematic view of the connector illustrated in FIG. 1.
FIG. 4 is a schematic side view of the connector illustrated in FIG. 3.
FIG. 5 is a partial enlarged view of a protrusion illustrated in FIG. 4.
FIG. 6 is a schematic view of a connector according to another embodiment illustrated in FIG. 1.
FIG. 7 is a schematic view of a connector according to yet another embodiment illustrated in FIG. 1.
FIG. 8 is a schematic view of the connector illustrated in FIG. 1, where the protrusion is formed into a cone.
FIG. 9 is a schematic side view of the connector formed into a cone in FIG. 8.
FIG. 10 is a schematic view of a connector according to still yet another embodiment illustrated in FIG. 1.
FIG. 11 is a schematic side view of the connector illustrated in FIG. 10.
FIG. 12 is a schematic view of a connector illustrated in FIG. 1, where a protrusion includes a connection segment and a piercing segment.
FIG. 13 is a schematic side view of the connector illustrated in FIG. 12.
FIG. 14 is a schematic view of a connector illustrated in FIG. 1, where a protrusion is formed into a pyramid.
FIG. 15 is a schematic side view of the connector illustrated in FIG. 14.
FIG. 16 is a schematic view of a connector according to an embodiment illustrated in FIG. 1.
FIG. 17 is a schematic side view of the connector illustrated in FIG. 16.
FIG. 18 is a schematic side view of the electrically conductive connection assembly illustrated in FIG. 16.
FIG. 19 is a schematic view of a battery cell according to an embodiment of the present disclosure.
FIG. 20 is a schematic view of a connector illustrated in FIG. 19.
FIG. 21 is a schematic view of a top view of the connector illustrated in FIG. 20.
FIG. 22 is a schematic view of a battery cell according to another embodiment.
FIG. 23 is a schematic view of a connector illustrated in FIG. 22.
FIG. 24 is a schematic view of a top view of the connector illustrated in FIG. 23.
FIG. 25 is a schematic view of a battery cell according to yet another embodiment.
FIG. 26 is a schematic view of a connector illustrated in FIG. 25.
FIG. 27 is a schematic top view of the connector illustrated in FIG. 26.
FIG. 28 is a schematic view of a current collector.

### Reference numerals:

electrically conductive connection assembly 100, connector 101, connection plate 1011,
protrusion 1012, protection plate 201,
current collector 202, electrode plate 2021, tab 20211,
first electrically conductive layer 202111, second electrically conductive layer 202112, support insulation layer 202113, and
battery cell 1000.

### DETAILED DESCRIPTION

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain rather than limit the present disclosure.

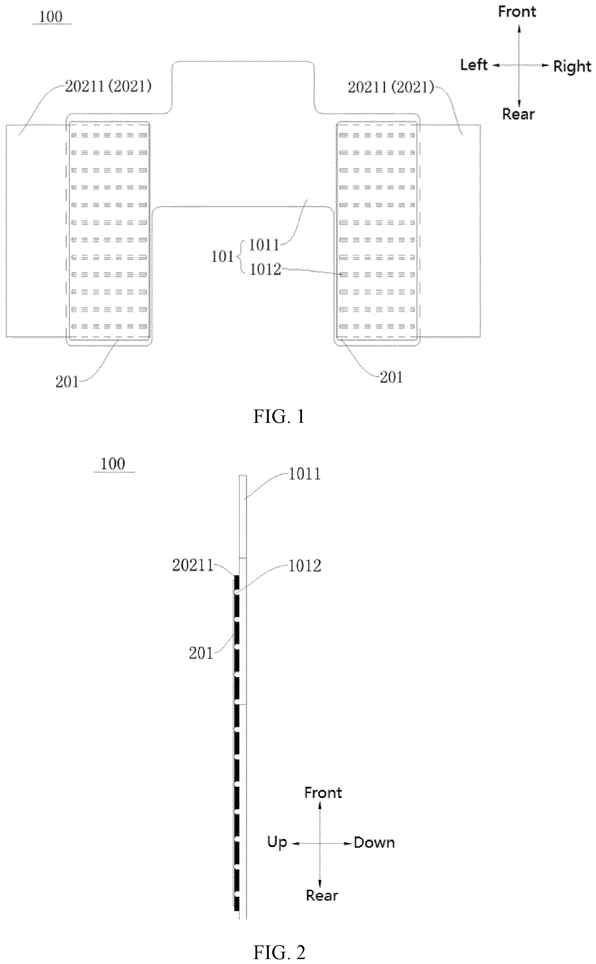

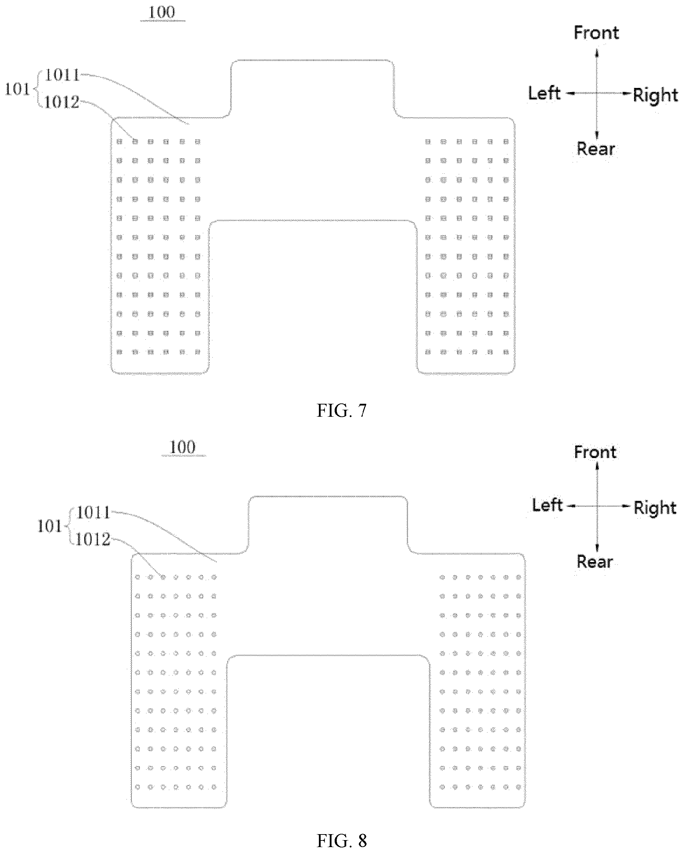

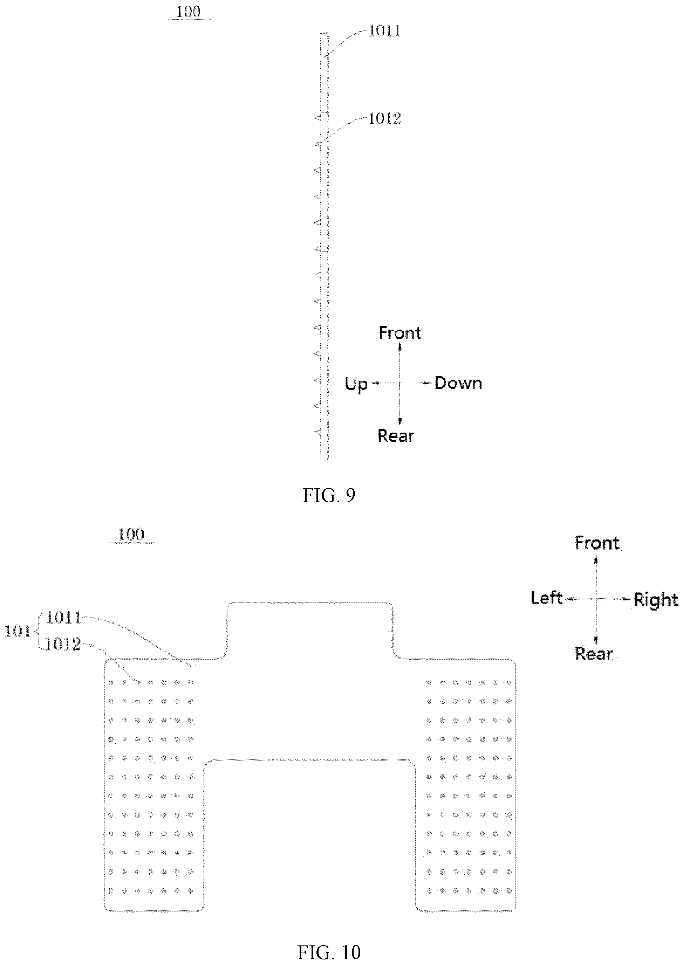

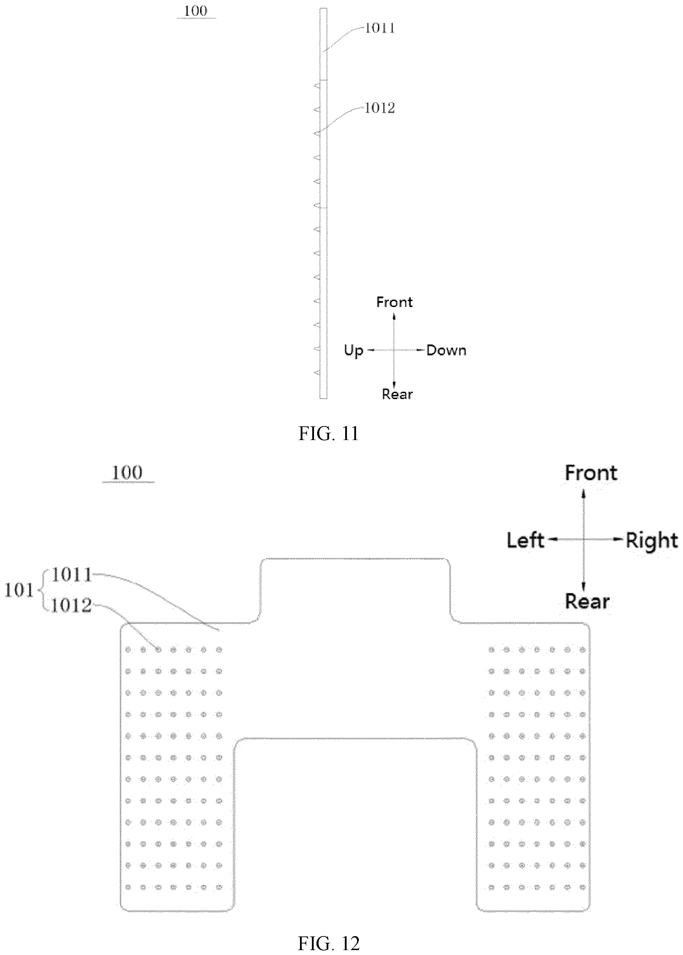

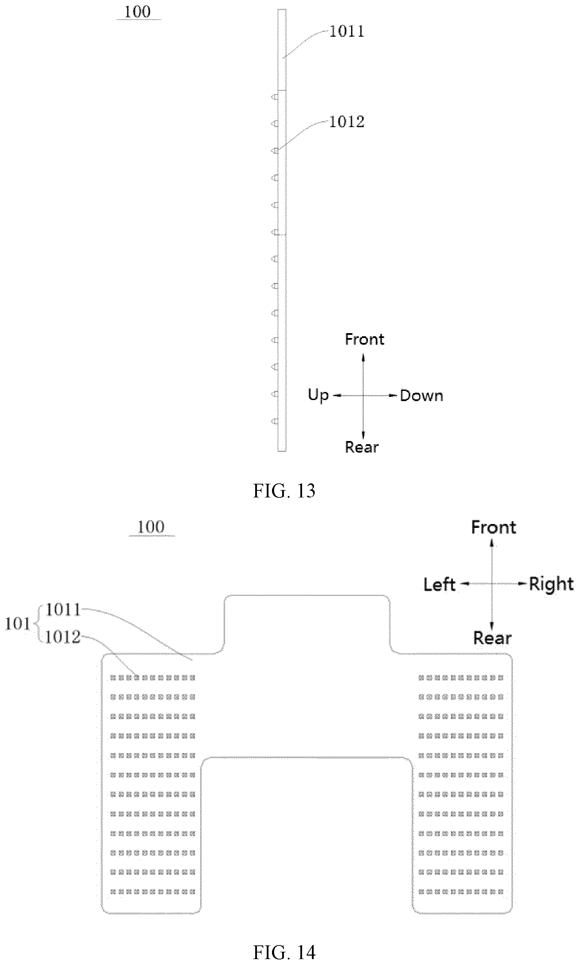

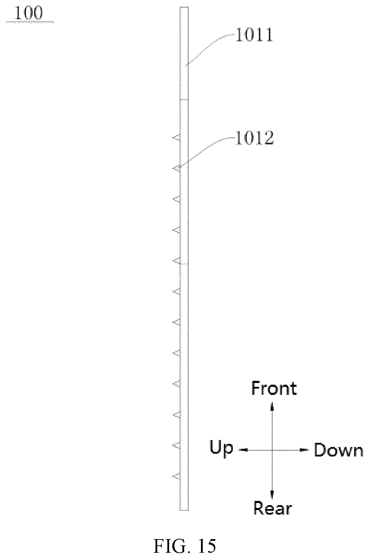

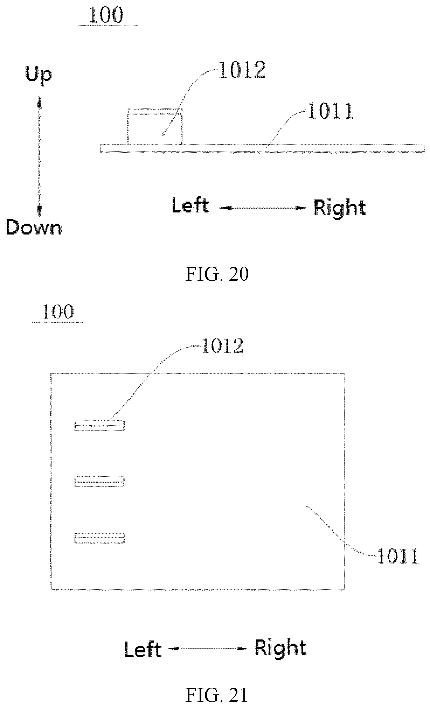

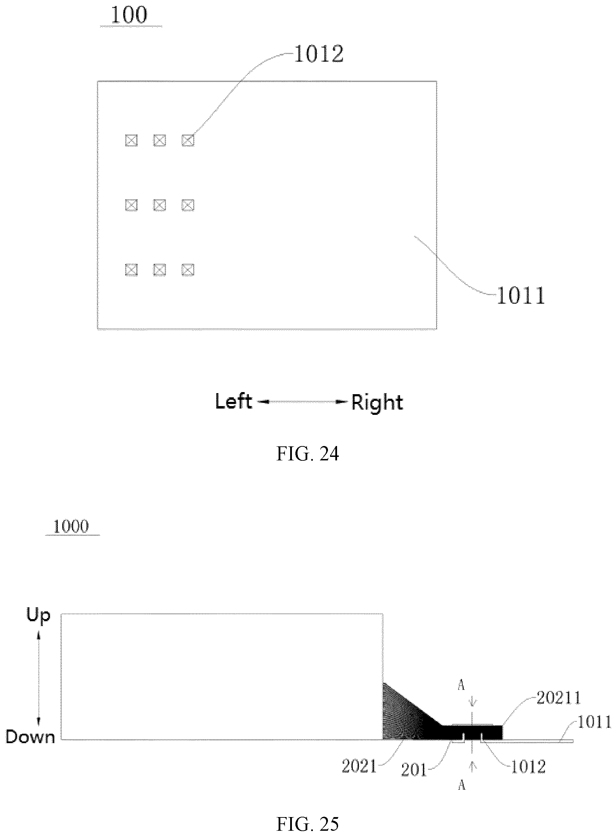

First, a battery cell 1000 according to an embodiment of the present disclosure will be briefly described with reference to FIG. 1 to FIG. 28. The battery cell 1000 includes a connector 101 according to embodiments of the present disclosure.

A battery cell 1000 according to embodiments of the present disclosure includes an electrode plate 2021 and an electrically conductive connection assembly 100.

In some embodiments, as illustrated in FIG. 1 to FIG. 28, the battery cell 1000 includes an electrode plate 2021 and an electrically conductive connection assembly 100. The electrode plate 2021 includes a plurality of tabs 20211 stacked together and a current collector 202. The electrically conductive connection assembly 100 includes the connector 101 according to the embodiments of the present disclosure. The connector 101 includes a connection plate 1011 and a protrusion 1012 arranged at the connection plate 1011. The protrusion 1012 is configured to penetrate the plurality of layers of tabs 20211 and be electrically connected to the plurality of layers of tabs 20211. That is, the battery cell 1000 is provided with the electrode plate 2021 and the electrically conductive connection assembly 100. The electrode plate 2021 is provided with the current collector 202 and the plurality of tabs 20211. The electrically conductive connection assembly 100 is provided with the connector 101. The connector 101 is the connector 101 according to the embodiments of the present disclosure, and includes the connection plate 1011 and the protrusion 1012 located at the connection plate 1011. Therefore, the battery cell 1000 has a simple structure, a connection between the tabs 20211 and the connector 101 is simple, and connection stability is good. The plurality of tabs 20211 may refer to two or more tabs 20211.

The battery cell 1000 may include at least two electrode plates 2021. One of the at least two electrode plates 2021 is a positive electrode plate, and another one of the at least two electrode plates is a negative electrode plate. The plurality of tabs 20211 stacked together may be formed by winding one electrode plate sheet material and stacking the plurality of tabs 20211 at the electrode plate sheet material, or by stacking the plurality of tabs 20211 and aligning the tabs 20211 on the electrode plate sheet material and then finally forming the plurality of tabs stacked together.

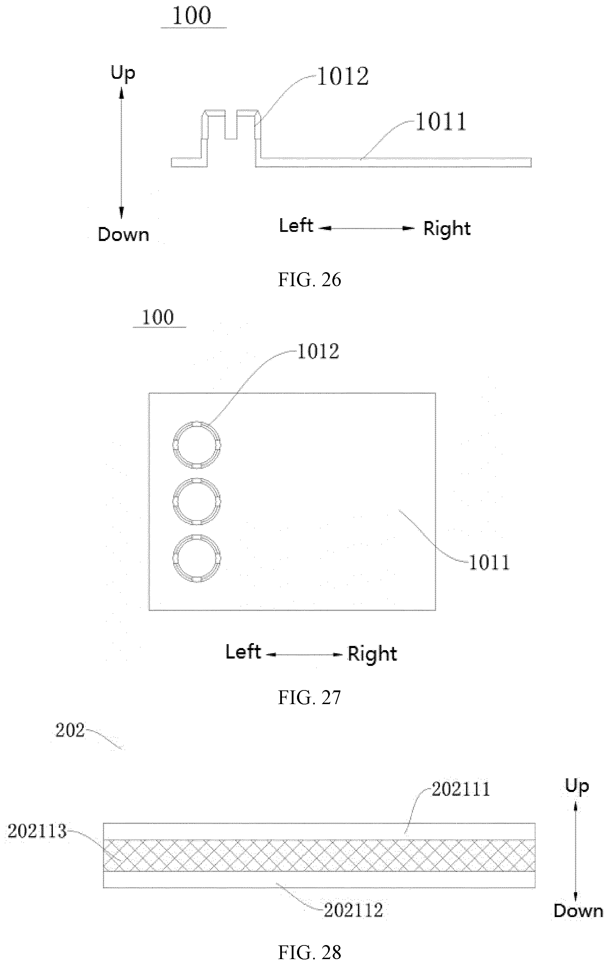

In some embodiments of the present disclosure, the electrode plate 2021 includes a support insulation layer 202113, and a first electrically conductive layer 202111 and a second electrically conductive layer 202112 that respectively cover two side surfaces of the support insulation layer 202113 in a thickness direction of the support insulation layer 202113. With reference to FIG. 28, the support insulation layer 202113 is located between the first electrically conductive layer 202111 and the second electrically conductive layer 202112, and the first electrically conductive layer 202111 and the second electrically conductive layer 202112 cover an upper surface and a lower surface of the support insulation layer 202113, respectively. In some embodiments, the support insulation layer 202113 may be a polymer layer. When using ultrasonic welding, an ultrasonic wave cannot be conducted to the plurality of layers of tabs 20211 at a bottom due to low compressive strength of the polymer. A friction force during the welding is insufficient without the protrusion, resulting in unreliable welding due to pseudo welding. In the embodiments of the present disclosure, due to an addition of the plurality of protrusions 1012, the friction force during the welding can be increased to relieve the unreliable welding due to the pseudo welding.

A connector 101 according to embodiments of the present disclosure will be described below with reference to FIG. 1 to FIG. 28.

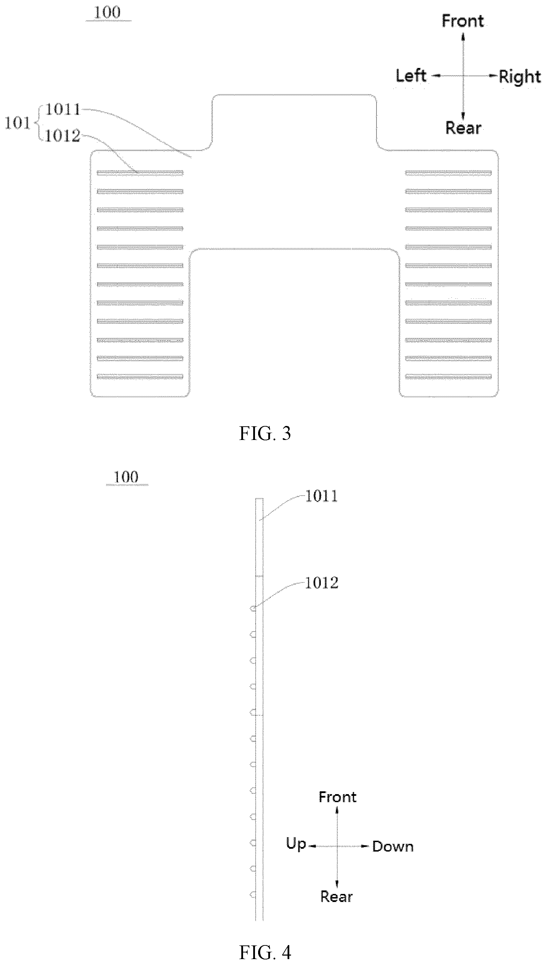

As illustrated in FIG. 3, a connector 101 according to embodiments of the present disclosure includes a connection plate 1011 and a protrusion 1012.

In some embodiments, the connector 101 is configured to electrically connect a plurality of layers of tabs 20211 of an electrode plate 2021. The connector 101 includes a connection plate 1011 and a protrusion 1012 arranged at the connection plate 1011. The protrusion 1012 protrudes from a side surface of the connection plate 1011 in a thickness direction of the connection plate 1011. The connection plate 1011 is provided with a plurality of protrusions 1012 arranged at intervals on the connection plate 1011 and penetrating the plurality of layers of tabs 20211. That is, the plurality of layers of tabs 20211 of the electrode plate 2021 is electrically connected to each other by the connector 101. The connector 101 is provided with the connection plate 101 and the plurality of protrusions 1012 penetrating the plurality of layers of tabs 20211. The plurality of protrusions 1012 is arranged at intervals at the side surface of the connection plate 1011 in the thickness direction of the connection plate 1011 and protrudes away from the connection plate 1011.

Referring to FIG. 3, the connection plate 1011 is formed into a horizontally extending plate-like shape. The plurality of protrusions 1012 is arranged at an upper surface of the connection plate 1011 and protrudes upwards. The plurality of protrusions 1012 is uniformly arranged at intervals in a horizontal direction. Each of the plurality of protrusions 1012 is configured to penetrate the plurality of layers of tabs 20211. Therefore, connection strength between the tabs 20211 and the connector 101 can be enhanced. In this way, the connection is stable, which ensures reliability of the battery cell 1000.

In the connector 101 according to the embodiments of the present disclosure, by arranging the protrusion 1012 at the connector 101, the connector 101 is easily connected to the tabs 20211, and welding energy can thus easily pass through the connector 101 and the tabs 20211. As a result, difficulty of welding the tabs 20211 is reduced, and a welding process from an operator is simplified. Thus, a manufacturing time is reduced with lower labor cost. In addition, the connection strength between the tabs 20211 and the connector 101 can be enhanced. In this way, the connection is stable, which ensures the reliability of the battery cell 1000.

In some embodiments of the present disclosure, the connection plate 1011 and the plurality of protrusions 1012 are integrally formed. In this way, a number of parts of the connector 101 are reduced with improved overall connection strength of the connector 101. Therefore, the connection stability of the connector 101 and the tabs 20211 is improved with a reduced defective rate of the connector 101. Therefore, a service life of the connector 101 is prolonged.

In some other embodiments of the present disclosure, the connection plate 1011 and the plurality of protrusions 1012 are separately arranged, and the plurality of protrusions 1012 is connected to the connection plate 1011 through welding, bonding, plugging or snapping. In this way, the connection plate 1011 and the protrusion 1012 are two separated components, which reduces production difficulty of the connector 101 and production cost of the connector 101. Therefore, it is possible to improve a fault tolerance rate during the welding of the connector 101 and the tabs 20211.

In some embodiments, the plurality of protrusions 1012 is connected to the connection plate 1011 through welding. In this way, a connection can be carried out simply. Moreover, the protrusion 1012 is firmly connected to the connection plate 1011, which is not easily damaged.

In some embodiments, the plurality of protrusions 1012 may be connected to the connection plate 1011 through electromagnetic pulse welding. In an exemplary example, the plurality of protrusions 1012 may also be connected to the connection plate 1011 through friction welding. In another exemplary example, the plurality of protrusions 1012 may also be connected to the connection plate 1011 through ultrasonic welding.

In some embodiments of the present disclosure, the connector 101 further includes a protruding plate (not illustrated) fixed at the connection plate 1011. The plurality of protrusions 1012 is arranged at a side of the protruding plate facing away from the connection plate 1011. That is, the connector 101 includes the protruding plate and the connection plate 1011. The protruding plate is fixedly connected to the connection plate 1011. The protruding plate and the plurality of protrusions 1012 are integrally formed, and the plurality of protrusions 1012 is formed at a side surface of the protruding plate facing away from the connection plate 1011 (e.g., an upper side surface illustrated in FIG. 4). Therefore, damage to a structure of the connection plate 1011 can be avoided, and a manufacturing process for welding the plurality of protrusions 1012 at the connection plate 1011 can be also simplified.

In some embodiments of the present disclosure, the plurality of protrusions 1012 is arranged at the side surface of the connection plate 1011 in a matrix pattern. With arrangement of the plurality of protrusions 1012 in an array, the connection strength between the tabs 20211 and the connector 101 can be enhanced, thereby preventing the tabs 20211 and the connector 101 from being separated from each other during transportation or use. Therefore, a yield rate of the battery cell 1000 can be improved. Moreover, a contact area between the protrusion 1012 and each layer of tabs 20211 is increased, thereby increasing an overcurrent area, which facilitates uniform heat dissipation. In addition, the battery pack is not prone to malfunction, thereby reducing a danger coefficient of a user, hence improving the use experience of the user.

In some embodiments of the present disclosure, the protrusion 1012 extends on the side surface of the connection plate 1011 along a straight line and/or a curved line. That is, the protrusion 1012 may extend on the side surface of the connection plate 1011 along the straight line, or the protrusion 1012 may also extend on the side surface of the connection plate 1011 along the curved line, or the protrusion 1012 may also extend on the side surface of the connection plate 1011 along the straight line and then along the curved line, or extend on the side surface of the connection plate 1011 along the curved line and then along the straight line. Therefore, welding requirements of different composite current collectors 202 are met, and the connection strength between the tabs 20211 and the connector 101 is enhanced. Moreover, an applicable range of the connector 101 is expanded, and the production cost of the connector 101 is reduced.

Referring to FIG. 27, the protrusion 1012 extends on an upper surface of the connection plate 1011 along the curved line, and is formed into an annular shape. The protrusion 1012 has four recesses formed at an upper part of the protrusion 1012. The four recesses are evenly arranged at intervals at the upper part of the protrusion 1012 and recessed downwards from an upper end face of the protrusion 1012 vertically. In this way, the contact area between the protrusion 1012 and each layer of tabs 20211 is increased. Therefore, the overcurrent area is increased. Thus, the connection strength can be enhanced.

In some embodiments of the present disclosure, the protrusion 1012 has a width ranging from 0.1 mm to 3 mm. Therefore, not only is material waste avoided, but also stability of a connection between the tabs 20211 and the connector 101 is ensured. For example, the width of the protrusion 1012 may be 0.1 mm, 0.15 mm, 0.2 mm, 0.3 mm, 0.4 mm, 0.55 mm, 0.6 mm, 0.85 mm, 1.0 mm, 1.1 mm, 1.2 mm, 1.3 mm, 1.35 mm, 1.4 mm, 1.5 mm, 1.6 mm, 1.7 mm, 1.8 mm, 1.9 mm, 2.0 mm, 2.1 mm, 2.2 mm, 2.3 mm, 2.45 mm, 2.6 mm, 2.7 mm, 2.8 mm, 2.9 mm, 3.0 mm, etc.

In some embodiments, a cross section of the protrusion 1012 perpendicular to a protruding height may be in a circular, elliptical, or polygonal shape.

In an exemplary example, when the cross section of the protrusion 1012 perpendicular to a protruding height is in a circular shape, the protrusion 1012 may be in a cylindrical shape, a conical shape, a truncated conical shape, or the like. When the cross section of the protrusion 1012 perpendicular to a protrusion height is in an elliptical shape, the protrusion 1012 may be in an elliptical cylinder shape, an elliptical cone shape, an elliptical truncated cone shape, or the like. When the cross section of the protrusion 1012 perpendicular to a protrusion height is a polygonal shape, the cross section may be in a triangular shape, a quadrangular shape, or the like, and the protrusion 1012 may be in a shape of triangular pyramid, a shape of a triangular prism, a shape of a rectangular pyramid, a shape of a quadrangular prism, a shape of a pentagonal pyramid, a shape of a hexagonal pyramid, or the like.

In some embodiments of the present disclosure, the protrusion 1012 protrudes from the connection plate 1011 by a height ranging from 0.1 mm to 3 mm. In this way, not only is the material waste avoided, but also the connection strength between the tabs 20211 and the connector 101 can be ensured. Moreover, the overall structure of the battery cell 1000 is easy for assembling into the battery pack. Therefore, mounting space is saved. Thus, the structure is compact, which reduces a volume of the battery pack and lowers transportation cost.

For example, the protrusion 1012 may protrude from the connection plate 1011 by a height of 0.1 mm, 0.15 mm, 0.2 mm, 0.4 mm, 0.55 mm, 0.6 mm, 0.85 mm, 1.0 mm, 1.1 mm, 1.2 mm, 1.35 mm, 1.4 mm, 1.5 mm, 1.6 mm, 1.7 mm, 1.8 mm, 2.0 mm, 2.2 mm, 2.45 mm, 2.6 mm, 2.7 mm, 2.8 mm, 2.9 mm, 3.0 mm, etc.

In some embodiments of the present disclosure, the connection plate 1011 and the protrusion 1012 are made of a same material. Due to different materials, conductors may vary in parameters such as a temperature resistance and a resistance, which may result in a significant safety risk. However, by using the same material, it is possible to ensure the reliability of the battery cell 1000, thereby reducing a failure rate. In addition, use safety of the battery pack can ensured, thereby avoiding an accident.

In some embodiments, the connection plate 1011 is made of a T2 pure copper or a copper alloy, or the like.

In some embodiments, the connector 101 may be connected to the plurality of layers of tabs 20211 through ultrasonic welding. The connector 101 includes the connection plate 1011 and the protrusion 1012 arranged at the connection plate 1011. The protrusion 1012 protrudes from the side surface of the connection plate 1011 in the thickness direction of the connection plate 1011. The connection plate 1011 is provided with a plurality of protrusions 1012 penetrating the plurality of layers of tabs 20211. The plurality of protrusions 1012 is arranged more densely in an ultrasonic vibration direction than in directions rather than the ultrasonic vibration direction.

That is, the plurality of layers of tabs 20211 is connected to the connector 101 through the ultrasonic welding. The connector 101 is provided with the connection plate 1011 and the plurality of protrusions 1012 penetrating the plurality of layers of tabs 20211. The plurality of protrusions 1012 is arranged at intervals on the side surface of the connection plate 1011 in the thickness direction of the connection plate 1011 and protrudes away from the connection plate 1011. The plurality of protrusions 1012 is arranged at a maximum density in the ultrasonic vibration direction. The plurality of protrusions 1012 is arranged less densely in directions rather than the ultrasonic vibration direction than in the ultrasonic vibration direction.

During the ultrasonic welding, high-frequency vibration of tens of thousands of times per second may be generated when ultrasonic waves act on a contact surface of an obj ect to be welded. Since the plurality of protrusions 1012 is densely arranged in the ultrasonic vibration direction, the protrusions 1012 can easily pierce the plurality of layers of tabs 20211. Therefore, the welding energy is easier to pass through the connector 101 and the tabs 20211. In this way, the difficulty of welding the tabs 20211 and the connector 101 is reduced.

Referring to FIG. 4, the connection plate 1011 is formed into a horizontally extending plate-like shape. The plurality of protrusions 1012 is arranged at the upper surface of the connection plate 1011 and protrudes upwards. The plurality of protrusions 1012 is uniformly arranged at intervals in a horizontal direction. Each of the plurality of protrusions 1012 is configured to penetrate the plurality of layers of tabs 20211. The plurality of protrusions 1012 is arranged in the ultrasonic vibration direction at the maximum density. In this way, the welding energy can easily pass through the connector 101 and the tabs 20211. Therefore, the difficulty of welding the tabs 20211 is reduced. Thus, the welding process from the operator is simplified.

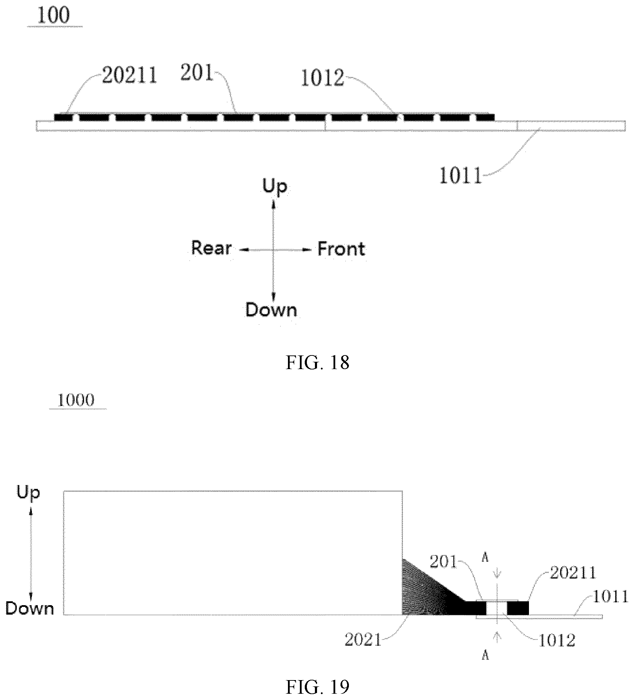

In some other embodiments, in a thickness direction of the tab 20211 (for example, in an up-down direction illustrated in FIG. 19), the plurality of layers of tabs 20211 is stacked together, a protection plate 201 is arranged at one of two opposite sides of the plurality of layers of tabs 20211 (for example, an upper side of the plurality of layers of tabs 20211 illustrated in FIG. 19), and a connection 1011 is arranged at another one of the two opposite sides of the plurality of layers of tabs 20211 (for example, a lower side of the plurality of layers of tabs 20211 illustrated in FIG. 19). The connection plate 1011 is connected to an end of the protrusion 1012 (for example, a lower end of the protrusion 1012 illustrated in FIG. 19). The protrusion 1012 pierces the plurality of layers of tabs 20211 and is electrically connected to the plurality of layers of tabs 20211. Further, another end of the protrusion 1012 (for example, an upper end of the protrusion 1012 illustrated in FIG. 19) is located in a surface of the protection plate 201 facing towards the connection plate 1011. In this way, damage to the protrusion 1012 is avoided, and a service life of the plurality of layers of tabs 20211 is prolonged.

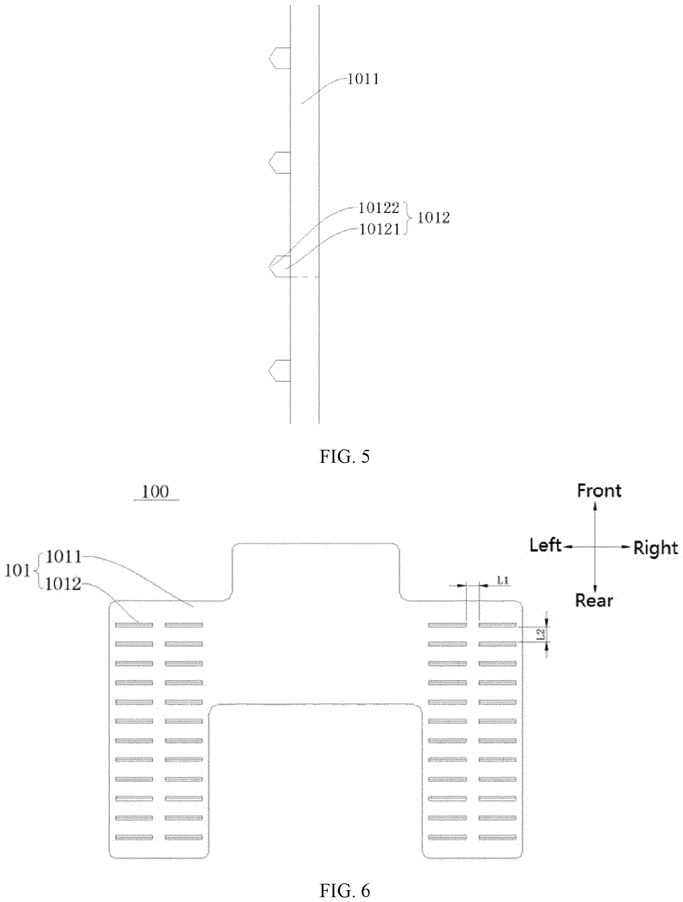

In some other embodiments, referring to FIG. 5, the protrusion 1012 includes a connection segment 10121 and a piercing segment 10122. A lower part of the protrusion 1012 is formed as the connection segment 10121. An upper part of the protrusion 1012 is formed as the piercing segment 10122. The connection segment 10121 is connected to the connection plate 1011, and the piercing segment 10122 is connected to an upper end of the connection segment 10121.

In some embodiments, the piercing segment 10122 of the protrusion 1012 is configured to pierce the plurality of layers of tabs 20211, and the connection segment 10121 of the protrusion 1012 is configured to connect the plurality of layers of tabs 20211. In this way, the welding energy can easily pass through the connector 101 and the tabs 20211. Therefore, the difficulty of welding the tabs 20211 and the connector 101 is reduced. Thus, the manufacturing time is reduced. Moreover, the connection strength between the tabs 20211 and the connector 101 is enhanced. Therefore, the connection is stable. Thus, the connection strength is enhanced while ensuring a piercing effect of the protrusion 1012.

A connector 101 according to an exemplary embodiment of the present disclosure will be described below with reference to FIG. 1 to FIG. 28.

Referring to FIG. 3, the protrusion 1012 is formed into an elongated shape, and the connector 101 is provided with the connection plate 1011 and the protrusion 1012. The connection plate 1011 is provided with a plurality of protrusions 1012. Each of the plurality of protrusions 1012 protrudes upwards from an upper surface of the connection plate 1011, and the plurality of protrusions 1012 is arranged at the upper surface of the connection plate 1011 in a matrix pattern. The protrusion 1012 has a length L of 13 mm, a height of 0.6 mm, and a width d of 0.6 mm. The protrusion 1012 extends on the upper surface of the connection plate 1011 along a straight line. The connection plate 1011 and the plurality of protrusions 1012 are integrally formed.

A connector 101 according to embodiments of the present disclosure will be described below with reference to FIG. 1 to FIG. 21 and FIG. 28.

As illustrated in FIG. 3, a connector 101 according to the embodiments of the present disclosure includes a connection plate 1011 and a protrusion 1012.

In an exemplary embodiment, the connector 101 is configured to electrically connect a plurality of layers of tabs 20211. The connector 101 includes a connection plate 1011 and a protrusion 1012. The protrusion 1012 is arranged at the connection plate 1011 and protrudes from a side surface of the connection plate 1011 in a thickness direction of the connection plate 1011. An end of the protrusion 1012 facing away from the connection plate 1011 is formed as a piercing end configured to pierce the plurality of layers of tabs 20211.

That is, the plurality of layers of tabs 20211 is electrically connected to each other by the connector 101. The connector 101 is provided with the connection plate 1011 and the protrusion 1012 penetrating the plurality of layers of tabs 20211. The protrusion 1012 is arranged at the side surface of the connection plate 1011 in the thickness direction of the connection plate 101 and protrudes away from the connection plate 1011. The end of the protrusion 1012 facing away from the connection plate 1011 (for example, an upper end of the protrusion 1012 illustrated in FIG. 4) is constructed as the piercing end. The piercing end is configured to pierce the plurality of layers of tabs 20211.

Referring to FIG. 3, the connection plate 1011 is formed into a horizontally extending plate-like shape. The plurality of protrusions 1012 is arranged at an upper surface of the connection plate 1011. The plurality of protrusions 1012 is uniformly arranged at intervals in a horizontal direction. Each of the plurality of protrusions 1012 protrudes upwards. An upper end of the protrusion 1012 is formed as the piercing end. A top end of the piercing end is a tip, and the piercing end can pierce each layer of tabs 20211. Therefore, the connection strength between the tabs 20211 and the connector 101 can be enhanced. In this way, the connection is stable, which ensures reliability of the battery cell 1000.

In the connector 101 according to the embodiments of the present disclosure, by arranging the protrusion 1012 with the piercing end at the connector 101, the piercing end can easily pierce the plurality of layers of tabs 20211, and the welding energy can thus easily pass through the connector 101 and the plurality of layers of tabs 20211. Therefore, the difficulty of welding the tabs 20211 is reduced. Thus, the welding process from the operator is simplified. As a result, the manufacturing time is reduced with the lower labor cost. In addition, the connection strength between the tabs 20211 and the connector 101 is enhanced. In this way, the connection is stable, which ensure the reliability of the battery cell 1000.

In some embodiments of the present disclosure, the protrusion 1012 is formed into a conical protrusion 1012 having a cone apex angle greater than 5° and less than 150°. In this way, the connection strength between the protrusion 1012 and the tabs 20211 and the difficulty of welding the protrusion 1012 and the tabs 20211 can be balanced. Therefore, neglect of the welding difficulty for the sake of ensuring the connection strength between the protrusion 1012 and the tabs 20211 can be avoided, or neglect of connection strength between the protrusion 1012 and the tabs 20211 for the sake of reducing the welding difficulty can be avoided. Therefore, the connection strength is enhanced while ensuring the piercing effect of the protrusion 1012.

For example, the cone apex angle of the conical protrusion 1012 may be 5°, 10°, 15°, 20°, 25°, 30°, 35°, 40°, 45°, 50°, 55°, 60°, 65°, 70°, 75°, 80°, 85°, 90°, 95°, 100°, 105°, 110°, 115°, 120°, 125°, 130°, 135°, 140°, 145°, 150°, etc.

In some other embodiments of the present disclosure, the protrusion 1012 is formed into a truncated conical protrusion 1012. A ratio of a radius of a top surface to a radius of a bottom surface of the truncated conical protrusion 1012 is less than or equal to 0.6. That is, a predetermined angle is formed between the top surface of the protrusion 1012 and a circumferential surface of the protrusion 1012, and an area of the top surface of the protrusion 1012 is less than an area of a bottom surface of the protrusion 1012. In this way, the top surface of the protrusion 1012 can easily pierce the plurality of layers of tabs 20211. Therefore, the piercing effect of the protrusion 1012 can be ensured, and melting of the protrusion 1012 is reduced during the welding. Thus, the reliability of the battery cell 1000 is improved.

For example, the ratio of the radius of the top surface to the radius of the bottom surface of the protrusion 1012 may be 0.6, 0.55, 0.5, 0.45, 0.4, 0.35, 0.3, 0.25, 0.2, 0.15, 0.1, etc.

In some embodiments, the radius of the top surface of the protrusion 1012 is less than or equal to 1.5 mm, and the radius of the bottom surface of the protrusion 1012 is less than or equal to 2.5 mm. For example, the radius of the top surface of the protrusion 1012 may be 1.5 mm, 1.4 mm, 1.3 mm, 1.2 mm, 1.1 mm, 1.0 mm, 0.8 mm, 0.6 mm, 0.4 mm, 0.2 mm, 0.1 mm, etc., and the radius of the bottom surface of the protrusion 1012 may be 2.5 mm, 2.4 mm, 2.3 mm, 2.2 mm, 2.1 mm, 2.0 mm, 1.9 mm, 1.8 mm, 1.7 mm, 1.6 mm, 1.5 mm, 1.4 mm, 1.3 mm, 1.2 mm, 1.1 mm, 1.0 mm, 0.8 mm, 0.6 mm, 0.4 mm, 0.2 mm, 0.1 mm, etc.

In some embodiments of the present disclosure, a cross section of the protrusion 1012 perpendicular to an extending direction of the protrusion 1012 is formed into a triangular shape. An angle of the piercing end is less than or equal to 120° in the cross section of the protrusion 1012 perpendicular to the extending direction. That is, the protrusion 1012 may be in a shape of a pyramid prism. The protrusion 1012 with the triangular cross section is easier to pierce the plurality of layers of tabs 20211, which can ensure the piercing effect of the protrusion 1012. In addition, the angle of the piercing end is less than or equal to 120°, and therefore the piercing effect of the protrusion 1012 can be further ensured. Thus, the difficulty of welding the tabs 20211 and the connector 101 is further reduced.

For example, in the cross section of the protrusion 1012 perpendicular to the extending direction, the angle of the piercing end may be 5°, 10°, 15°, 20°, 25°, 30°, 35°, 40°, 45°, 50°, 55°, 60°, 65°, 70°, 75°, 80°, 85°, 90°, 95°, 100°, 105°, 110°, 115°, 120°, etc.

In some other embodiments of the present disclosure, the cross section of the protrusion 1012 in the extending direction is formed into a triangular shape. An angle of the piercing end is less than or equal to 120° in the cross section of the protrusion 1012 perpendicular to the extension direction. That is, the protrusion 1012 may be in a shape of a pyramid prism, or may also be in a shape of a cone.

For example, in the cross section of the protrusion 1012 in the extending direction of the protrusion 1012, an angle of the piercing end may be 5°, 10°, 15°, 20°, 25°, 30°, 35°, 40°, 45°, 50°, 55°, 60°, 65°, 70°, 75°, 80°, 85°, 90°, 95°, 100°, 105°, 110°, 115°, 120°, etc.

In some yet other embodiments of the present disclosure, the cross section of the protrusion 1012 perpendicular to the extending direction is formed into a trapezoidal shape. A ratio of an upper side to a lower side of the cross section of the protrusion 1012 perpendicular to the extending direction is less than or equal to 0.6. That is, the protrusion 1012 may be a frustum, a prism, or a truncated cone. The lower side of the protrusion 1012 is connected to the connector 101, and the upper side of the protrusion 1012 is less than the lower side of the protrusion 1012. In this way, the piercing effect of the protrusion 1012 can be ensured. In addition, the ratio of the upper side to the lower side of the cross section of the protrusion 1012 is less than or equal to 0.6, and therefore the piercing effect of the protrusion 1012 is further ensured. Thus, the difficulty of welding the tabs 20211 and the connector 101 can be further reduced.

For example, the ratio of the upper side to the lower side of the cross section of the protrusion 1012 may be 0.6, 0.55, 0.5, 0.45, 0.4, 0.35, 0.3, 0.25, 0.2, 0.15, 0.1, etc.

In one embodiment, a length of the upper side of the cross section of the protrusion 1012 is less than or equal to 3 mm, and a length of the lower side of the cross section of the protrusion 1012 is less than or equal to 5 mm. For example, the length of the upper side of the cross section of the protrusion 1012 may be 0.1 mm, 0.2 mm, 0.4 mm, 0.6 mm, 0.8 mm, 1.0 mm, 1.2 mm, 1.4 mm, 1.6 mm, 1.8 mm, 2.0 mm, 2.2 mm, 2.4 mm, 2.6 mm, 2.8 mm, 3.0 mm, etc., and the length of the lower side of the cross section of the protrusion 1012 may be 0.2 mm, 0.4 mm, 0.6 mm, 0.8 mm, 1.0 mm, 1.2 mm, 1.4 mm, 1.6 mm, 1.8 mm, 2.0 mm, 2.2 mm, 2.4 mm, 2.6 mm, 2.8 mm, 3.0 mm, 3.2 mm, 3.4 mm, 3.6 mm, 3.8 mm, 4.0 mm, 4.2 mm, 4.4 mm, 4.6 mm, 4.8 mm, 5.0 mm, etc.

In some embodiments of the present disclosure, the protrusion 1012 includes a connection segment 10121 and a piercing segment 10122 connected to the connection segment 10121 in a height direction of the protrusion 1012. The connection segment 10121 is connected to the connection plate 1011. Then piercing segment 10122 is connected to an end of the connection segment 10121 away from the connection plate 1011. The connection segment 10121 has a constant cross sectional area in the height direction of the protrusion 1012. The piercing segment 10122 is formed as the piercing end. Referring to FIG. 5, the protrusion 1012 includes two parts: the connection segment 10121 and the piercing segment 10122. A lower part of the protrusion 1012 is the connection segment 10121, and an upper part of the protrusion 1012 is the piercing segment 10122. The connection segment 10121 is connected to the connection plate 1011. The piercing segment 10122 is connected to an upper end of the connection segment 10121. In an up-down direction illustrated in FIG. 4, the connection segment 10121 has a constant cross sectional area.

In some embodiments, the piercing segment 10122 of the protrusion 1012 is configured to pierce the plurality of layers of tabs 20211, and the connection segment 10121 of the protrusion 1012 is configured to connect the plurality of layers of tabs 20211. In this way, the welding energy can easily pass through the connector 101 and the tabs 20211. Therefore, the difficulty of welding the tabs 20211 and the connector 101 is reduced. Thus, the manufacturing time is reduced. Moreover, the connection strength between the tabs 20211 and the connector 101 is enhanced. Therefore, the connection is stable, and thus the connection strength is enhanced while ensuring the piercing effect of the protrusion 1012.

In some embodiments of the present disclosure, the protrusion 1012 has a height less than or equal to 5 mm. Therefore, not only is an unstable connection due to too small height of the protrusion 1012 avoided, but also resource waste due to too large height of the protrusion 1012 is avoided. For example, the height of the protrusion 1012 may be 5 mm, 4.5 mm, 4 mm, 3.5 mm, 3 mm, 2.5 mm, 2 mm, 1.5 mm, 1 mm, 0.5 mm, etc.

In some embodiments, the protrusion 1012 with a suitable height may be select4d by a user based on a thickness of the plurality of layers of tabs 20211.

Further, the height of the piercing segment 10122 is less than or equal to 2 mm in the height direction of the protrusion 1012. For example, the height of the piercing segment 10122 may be 2 mm, 1.8 mm, 1.6 mm, 1.4 mm, 1.2 mm, 1 mm, 0.8 mm, 0.6 mm, 0.4 mm, 0.2 mm, etc. Therefore, the piercing effect of the protrusion 1012 is ensured. In addition, the difficulty of welding the tabs 20211 and the connector 101 is reduced. Thus, the manufacturing time is reduced with improvement of welding efficiency.

Further, a height of the connection segment 10121 is less than or equal to 3 mm in the height direction of the protrusion 1012. The height of the connection segment 10121 may be 3 mm, 2.8 mm, 2.6 mm, 2.4 mm, 2.2 mm, 2 mm, 1.8 mm, 1.6 mm, 1.4 mm, 1.2 mm, 1 mm, 0.8 mm, 0.6 mm, 0.4 mm, 0.2 mm, etc. Therefore, the connection strength between the tabs 20211 and the connector 101 is enhanced. Thus, the tabs 20211 and the connector 101 are less prone to be separated from each other, which improves the yield rate.

In some embodiments of the present disclosure, in the height direction of the protrusion 1012, a cross sectional area of the piercing segment 10122 gradually decreases, and an apex angle of the piercing segment 10122 is less than or equal to 120°. Referring to FIG. 5, in an up-down direction of the protrusion 1012, the cross sectional area of the piercing segment 10122 gradually decreases in a direction from bottom to top. The cross sectional area of the piercing segment 10122 is largest at a bottom surface of the piercing segment 10122, and the cross sectional area of the piercing segment 10122 is smallest at a top surface of the piercing segment 10122. In this way, the protrusion 1012 is easier to pierce the plurality of layers of tabs 20211. Therefore, the difficulty of welding the tabs 20211 and the connector 101 is reduced. Thus, a welding duration for the tabs 20211 and the connector 101 is reduced. As a result, the production efficiency is improved.

In some embodiments of the present disclosure, a smooth transition is formed between the connection segment 10121 and the piercing segment 10122. Since friction is generated between the tabs 20211 and the protrusion 1012 during the welding, the protrusion 1012 with such a smooth transition between the connection segment 10121 and the piercing segment 10122 can prevent the tabs 20211 from being easily damaged, thereby prolonging a service life of the tabs 20211. Further, it is possible to ensure the yield rate of the battery cell 1000, thereby improving the safety and reliability of the battery pack.

In some embodiments, the connection plate 1011 and the protrusion 1012 are made of a same material. Due to different materials, conductors may vary in parameters such as a temperature resistance and a resistance, which poses a significant safety risk. However, by using the same material, it is possible to ensure the reliability of the battery cell 1000, thereby reducing a failure rate. In addition, use safety of the battery pack is ensured, thereby avoiding an accident.

In some embodiments, the connection plate 1011 is made of a T2 pure copper or a copper alloy, or the like.

In some embodiments, the protrusion 1012 has a width ranging from 0.1 mm to 3 mm. In this way, not only is the material waste avoided, but also the connection stability between the tabs 20211 and the connector 101 can be ensured. For example, the width of the protrusion 1012 may be 0.1 mm, 0.15 mm, 0.2 mm, 0.3 mm, 0.4 mm, 0.55 mm, 0.6 mm, 0.85 mm, 1.0 mm, 1.1 mm, 1.2 mm, 1.3 mm, 1.35 mm, 1.4 mm, 1.5 mm, 1.6 mm, 1.7 mm, 1.8 mm, 1.9 mm, 2.0 mm, 2.1 mm, 2.2 mm, 2.3 mm, 2.45 mm, 2.6 mm, 2.7 mm, 2.8 mm, 2.9 mm, 3.0 mm, etc.

In some embodiments, a cross section of the protrusion 1012 perpendicular to a protruding height of the protrusion 1012 may be in a circular, elliptical, or polygonal shape.

In some embodiments, when the cross section of the protrusion 1012 perpendicular to the protruding height is in a circular shape, the protrusion 1012 may be in a conical shape, a truncated conical shape, or the like. When the cross section of the protrusion 1012 perpendicular to the protrusion height is in an elliptical shape, the protrusion 1012 may be in an elliptical cone shape, an elliptical truncated cone shape, or the like. When the cross section of the protrusion 1012 perpendicular to the protrusion height is a polygonal shape, the cross section may be in a triangular shape, a quadrangular shape, a pentagonal shape, a hexagonal shape, or the like, and the protrusion 1012 may be in a shape of triangular pyramid, a shape of a triangular prism, a shape of a rectangular pyramid, a shape of a quadrangular prism, a shape of a pentagonal pyramid, a shape of a hexagonal pyramid, or the like.

A connector 101 according to an exemplary embodiment of the present disclosure will be described below with reference to FIG. 1 to FIG. 21 and FIG. 28.

Referring to FIG. 3, the protrusion 1012 is formed into an elongated shape, and the connector 101 is provided with a connection plate 1011 and protrusions 1012. The protrusions 1012 each protrude upwards from an upper surface of the connection plate 1011, and are arranged at the upper surface of the connection plate 1011 in a matrix pattern. The connection plate 1011 has a thickness of 0.8 mm. Each of the protrusions 1012 has a length L of 13 mm, and a width d of 0.6 mm. A connection segment 10121 of the protrusion 1012 has a height of 0.4 mm. A piercing segment 10122 of the protrusion 1012 has a height of 0.2 mm, and an apex angle of 67°. The connection segment 10121 has a constant cross sectional area in an up-down direction. A cross sectional area of the piercing segment 10122 gradually decreases in a direction from bottom to top. The protrusion 1012 extends on the upper surface of the connection plate 1011 along a straight line. The connection plate 1011 and the protrusions 1012 are integrally formed.

A connector 101 according to embodiments of the present disclosure will be described with reference to FIG. 1, FIG. 3, FIG. 19, FIG. 23 to FIG. 28.

As illustrated in FIG. 1, a connector 101 according to the embodiments of the present disclosure includes a connection plate 1011 and a protrusion 1012.

In some embodiments, the connector 101 is configured to electrically connect a plurality of layers of tabs 20211. The connector 101 includes a connection plate 1011 and a protrusion 1012 arranged at the connection plate 1011. The protrusion 1012 protrudes from a side surface of the connection plate 1011 in a thickness direction of the connection plate 1011. The connection plate 1011 is provided with a plurality of protrusions 1012 arranged at intervals on the connection plate 1011 and penetrating the plurality of layers of tabs 20211. A free end face of each of the plurality of protrusions 1012 is formed as a planner surface in a height direction of the protrusion 1012.

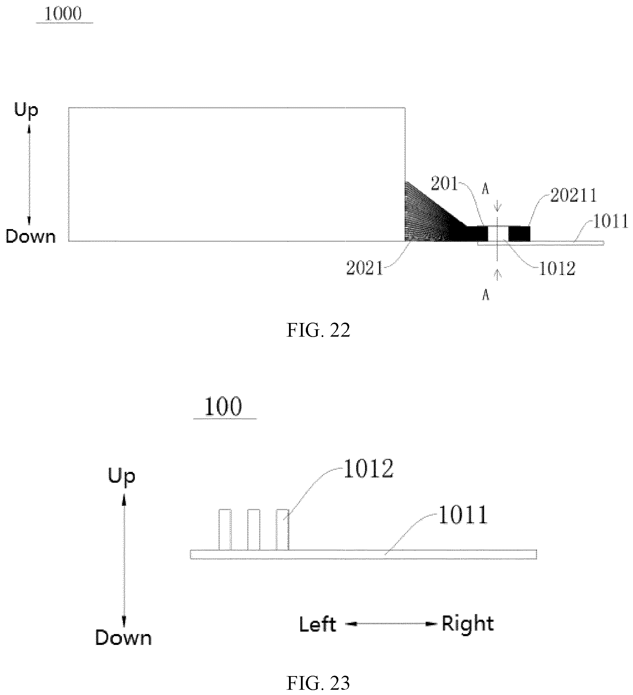

That is, the plurality of layers of tabs 20211 is electrically connected to each other by the connector 101. The connector 101 is provided with the connection plate 1011 and the protrusion 1012 penetrating the plurality of layers of tabs 20211. The protrusion 1012 is arranged at the side surface of the connection plate 1011 in a thickness direction of the connection plate 1011 and protrudes t facing away from the connection plate 1011. The connection plate 1011 is provided with a plurality of protrusions 1012 arranged at intervals on the connection plate 1011 and penetrating the plurality of layers of tabs 20211. A free end of the protrusion 1012 (for example, a top end of the protrusion 1012 illustrated in FIG. 23) is a flat surface in a height direction of the protrusion 1012 (for example, an up-down direction illustrated in FIG. 23).

Referring to the drawings, the connection plate 1011 is formed into a horizontally extending plate-like shape. The plurality of protrusions 1012 is arranged at an upper surface of the connection plate 1011. The plurality of protrusions 1012 is uniformly arranged at intervals in a horizontal direction. Each of the plurality of protrusions 1012 is configured to penetrate the plurality of layers of tabs 20211. In an up-down direction of each protrusion 1012, a top end of each protrusion 1012 is formed into a flat surface. In this way, the connection strength between the tabs 20211 and the connector 101 is enhanced. Therefore, the connection is stable, which ensures the reliability of the battery cell 1000.

In the connector 101 according to the embodiments of the present disclosure, by arranging the protrusion 1012 having the flat top end surface at the connector 101, the protrusion 1012 can easily pierce the plurality of layers of tabs 20211, and the welding energy can easily pass through the connector 101 and the plurality of layers of tabs 20211. Therefore, the difficulty of welding the tabs 20211 is reduced. Thus, the welding process from the operator is simplified. As a result, the manufacturing time is reduced with the lower labor cost. In addition, the connection strength between the tabs 20211 and the connector 101 is enhanced, which ensures the reliability of the battery cell 1000. In this way, a failure rate is reduced. Therefore, a safety factor of the battery cell 1000 is improved, which ensures use safety of the battery cell 1000. Thus, a potential safety hazard is avoided with a reduction in occurrence of dangerous accident.

In some embodiments of the present disclosure, the protrusion 1012 has a constant cross sectional area in the height direction of the protrusion 1012. As illustrated in FIG. 23, the cross sectional area of the protrusion 1012 from bottom to top is constant, thereby ensuring that a connection area between the protrusion 1012 and each layer of the tabs 20211 is substantially constant. Since the contact area is different, parameters such as a resistance and a current between the tabs 20211 and the protrusion 1012 is also different, thereby avoiding the potential safety hazard.

In some embodiments of the present disclosure, the cross sectional area of the protrusion 1012 is less than or equal to 5 mm². When the cross sectional area is too large, the piercing of the plurality of layers of tabs 20211 by the protrusion 1012 will be affected. In this case, the welding energy cannot easily pass through the connector 101 and the tabs 20211, which increases the difficulty of welding the tabs 20211 and the connector 101. When the cross sectional area is too small, an effective contact area between each protrusion 1012 and each layer of the tab 20211 may be reduced, which increases a use risk of the battery cell 1000.

For example, the cross sectional area of the protrusion 1012 may be 5mm², 4.5mm², 4mm², 3.5mm², 3mm², 2.5mm², 2mm², 1.5mm², 1mm², 0.5mm², etc. Therefore, the connection strength between the tabs 20211 and the connector 101 as well as the contact area between the tabs 20211 and the connector 101 are ensured. As a result, the difficulty of welding the tabs 20211 and the connector 101 can be reduced, thereby reducing the failure rate. In addition, the use safety of the battery pack is ensured, thereby avoiding the potential safety hazard during the using.

In some embodiments of the present disclosure, the cross section of the protrusion 1012 perpendicular to the protrusion height is in a circular, elliptical, or polygonal shape. When the cross section of the protrusion 1012 perpendicular to the protruding height is in a circular shape, the protrusion 1012 may be in a cylindrical shape. When the cross section of the protrusion 1012 perpendicular to the protruding height is in an elliptical shape, the protrusion 1012 may be in an elliptical cylindrical shape. When the cross section of the protrusion 1012 perpendicular to the protruding height is in a polygonal shape, the cross section may be in a triangular shape, a quadrangular shape, a pentagonal shape, a hexagonal shape, or the like, the protrusion 1012 may be in a shape of a triangular prism, a shape of a quadrangular prism, a shape of a pentagonal prism, a shape of a hexagonal prism, or the like.

In some embodiments of the present disclosure, a ratio of the cross sectional area of the protrusion 1012 to a height of the protrusion 1012 is less than or equal to 5. In this way, the balance of the connection strength between the protrusion 1012 and the tabs 20211 and the difficulty of welding the protrusion 1012 and the tabs 20211 is facilitated. Therefore, the neglect of the welding difficulty for the sake of ensuring the connection strength between the protrusion 1012 and the tabs 20211 is avoided, or the neglect of connection strength between the protrusion 1012 and the tabs 20211 for the sake of reducing the welding difficulty is avoided. Therefore, the connection strength is enhanced while ensuring the piercing effect of the protrusion 1012.

For example, the ratio of the cross sectional area of the protrusion 1012 to the height of the protrusion 1012 may be 5, 4.5, 4, 3.5, 3, 2.5, 2, 1.5, 1, 0.5, etc.

In an embodiment of the present disclosure, the cross section of the protrusion 1012 is formed into the circular shape. In this case, the protrusion 1012 has a radius of less than or equal to 3 mm. For example, the radius of the protrusion 1012 may be 0.1 mm, 0.15 mm, 0.2 mm, 0.4 mm, 0.55 mm, 0.6 mm, 0.85 mm, 1.0 mm, 1.1 mm, 1.2 mm, 1.35 mm, 1.4 mm, 1.5 mm, 1.6 mm, 1.7 mm, 1.8 mm, 2.0 mm, 2.2 mm, 2.45 mm, 2.6 mm, 2.7 mm, 2.8 mm, 2.9 mm, 3.0 mm, etc.

In another embodiment of the present disclosure, the cross section of the protrusion 1012 is formed into a square shape. In this case, a length of each side of the cross section of the protrusion 1012 is less than or equal to 3 mm. For example, the length of each side of the cross section of the protrusion 1012 may be 0.1 mm, 0.15 mm, 0.2 mm, 0.4 mm, 0.55 mm, 0.6 mm, 0.85 mm, 1.0 mm, 1.1 mm, 1.2 mm, 1.35 mm, 1.4 mm, 1.5 mm, 1.6 mm, 1.7 mm, 1.8 mm, 2.0 mm, 2.2 mm, 2.45 mm, 2.6 mm, 2.7 mm, 2.8 mm, 2.9 mm, 3.0 mm, etc.

In an embodiment of the present disclosure, a ratio of the length of each side of the cross section of the protnzsion1012 to the height of the protrusion 1012 is less than or equal to 1. For example, a ratio of the length of each side of the cross section of the protrusion 10 12 to the height of the protrusion 1012 may be 1, 0.9, 0.8, 0.7, 0.6, 0.5, 0.4, 0.3, 0.2, 0.1, etc.

In some embodiments, the connection plate 1011 and the protrusion 1012 are made of a same material. Due to different materials, conductors may vary in parameters such as a temperature resistance and a resistance, which poses a significant safety risk. However, by using the same material, it is possible to ensure the reliability of the battery cell 1000, thereby reducing a failure rate. In addition, use safety of the battery pack is ensured, thereby avoiding an occurrence of an accident.

In some embodiments, the connection plate 1011 is made of a T2 pure copper, a copper alloy, or the like.

Referring to FIG. 26, the protrusion 1012 extends on the upper surface of the connection plate 1011 along a curved line and is formed into an annular shape. The protrusion 1012 has four recesses formed at an upper part of the protrusion 1012. The four recesses are evenly arranged at intervals at the upper part of the protrusion 1012 and recessed downwards from an upper end face of the protrusion 1012 vertically. In this way, the contact area between the protrusion 1012 and each layer of the tabs 20211 is increased. Therefore, the overcurrent area is increased, thereby enhancing the connection strength.

A connector 101 according to an exemplary embodiment of the present disclosure will be described below with reference to FIG. 1, FIG. 3, FIG. 19, and FIG. 23 to FIG. 28.

Referring to FIG. 3, the connector 101 is provided with a connection plate 1011 and protrusions 1012. Each of the protrusions 1012 protrudes upwards from an upper surface of the connection plate 1011, and are arranged at the upper surface of the connection plate 1011 in a matrix pattern. The connection plate 1011 has a thickness of 0.8 mm. Each of the protrusions 1012 has a length L of 13 mm, a width d of 0.6 mm, and a height of 0.6 mm. The protrusion 1012 has a constant cross sectional area in an up-down direction of the protrusion 1012. The protrusion 1012 extends on the upper surface of the connection plate 1011 along a straight line. The connection plate 1011 and the protrusions 1012 are integrally formed.

A connector 101 according to embodiments of the present disclosure will be described below with reference to FIG. 1 to FIG. 28.

As illustrated in FIG. 3, a connector 101 according to the embodiments of the present disclosure includes a connection plate 1011 and a protrusion 1012.

In some embodiments, the connector 101 is configured to electrically connect a plurality of layers of tabs 20211. The connector 101 includes a connection plate 1011 and a protrusion 1012 arranged at the connection plate 1011. The protrusion 1012 protrudes from a side surface of the connection plate 1011 in a thickness direction of the connection plate 1011. The connection plate 1011 is provided with a plurality of protrusions 1012 penetrating the plurality of layers of tabs 20211 and arranged more densely in an ultrasonic vibration direction than in directions other than the ultrasonic vibration direction.

That is, the plurality of layers of tabs 20211 is connected to the connector 101 through ultrasonic welding. The connector 101 is provided with the connection plate 1011 and the plurality of protrusions 1012 penetrating the plurality of layers of tabs 20211. The plurality of protrusions 1012 is arranged at intervals on the side surface of the connection plate 1011 in the thickness direction of the connection plate 1011 and protrudes away from the connection plate 1011. The plurality of protrusions 1012 is arranged in the ultrasonic vibration direction at the maximum density, and is arranged less densely in the directions other than the ultrasonic vibration direction than in the ultrasonic vibration direction.

When using the ultrasonic welding, high-frequency vibration of tens of thousands of times per second may be generated when an ultrasonic wave acts on a contact surface of an obj ect to be welded. Since the plurality of protrusions 1012 is densely arranged in the ultrasonic vibration direction, the plurality of protrusions 1012 can easily pierce the plurality of layers of tabs 20211, and the welding energy can thus easily pass through the connector 101 and the tabs 20211. In this way, the difficulty of welding the tabs 20211 and the connector 101 is reduced.

Referring to FIG. 3, the connection plate 1011 is formed into a horizontally extending plate-like shape. The plurality of protrusions 1012 is arranged at an upper surface of the connection plate 1011 and protrudes upwards. The plurality of protrusions 1012 is uniformly arranged at intervals in a horizontal direction. Each of the plurality of protrusions 1012 is configured to penetrate the plurality of layers of tabs 20211. The plurality of protrusions 1012 is arranged in the ultrasonic vibration direction at the maximum density. In this way, the welding energy can easily pass through the connector 101 and the tabs 20211. Therefore, the difficulty of welding the tabs 20211 is reduced. Thus, the welding process from the operator is simplified.

In the connector 101 according to the present disclosure, by arranging the plurality of protrusions 1012 more densely in the ultrasonic vibration direction than in the directions other than the ultrasonic vibration direction, welding speed between the tabs 20211 and the connector 101 is improved. Therefore, the manufacturing time is reduced. Thus, production cost of the battery cell 1000 is reduced. As a result, production efficiency of the battery pack can be improved.

It should be noted here that when the arrangement density of the plurality of protrusions 1012 in the ultrasonic vibration direction is enough greater, each of the plurality of protrusions 1012 is formed into an elongated shape extending in the ultrasonic vibration direction.

In some embodiments of the present disclosure, a spacing between two adj acent protrusions 1012 in the ultrasonic vibration direction is L1, and a spacing between two adjacent protrusions 1012 in a direction perpendicular to the ultrasonic vibration direction is L2, where L1 and L2 satisfy 0.5mm<L1<10mm, 0.5mm≤L2≤10mm, and L1≤L2. That is, the spacing between the two adjacent protrusions 1012 in the ultrasonic vibration direction is less than or equal to the spacing between the two adjacent protrusions 1012 in the direction perpendicular to the ultrasonic vibration direction. That is, the arrangement density of the plurality of protrusions 1012 in the direction perpendicular to the ultrasonic vibration direction is less than in the ultrasonic vibration direction. In this way, the welding speed is further improved. Therefore, the production efficiency is improved with lowered production cost. In addition, an arrangement pattern of the protrusions 1012 is optimized. Therefore, an unstable welding point between the tabs 20211 and the connector 101 is avoided to improve product quality.

For example, the spacing L1 between two adjacent protrusions 1012 in the ultrasonic vibration direction may be 0.5 mm, 0.7 mm, 0.9 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, 10 mm, etc. The spacing L2 between two adjacent projections 1012 in the direction perpendicular to the ultrasonic vibration direction may be 0.5 mm, 0.7 mm, 0.9 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, 10 mm, etc.

In an embodiment of the present disclosure, the plurality of protrusions 1012 extends on a surface of the connection plate 1011 in the ultrasonic vibration direction, and is arranged at intervals in the direction perpendicular to the ultrasonic vibration direction. Referring to FIG. 3, the plurality of protrusions 1012 extends on an upper surface of the connection plate 1011 in the ultrasonic vibration direction, and is arranged at intervals in the direction perpendicular to the ultrasonic vibration direction. The protrusion 1012 is formed into an elongated shape. In this way, the contact area between the tabs 20211 and the protrusions 1012 is significantly increased. Therefore, the unstable welding between the tabs 20211 and the connector 101 is avoided, which enhances the connection strength between the tabs 20211 and the connector 101.

In some embodiments of the present disclosure, in the direction perpendicular to the ultrasonic vibration direction, the spacing L2 between two adjacent protrusions 1012 is not less than a width d of the protrusion 1012. That is, in the direction perpendicular to the ultrasonic vibration direction, the spacing L2 between two adjacent protrusions 1012 is greater than or equal to the width d of the protrusion 1012. L2 may be greater than d, or may also be equal to d. In this way, a placement direction of the connector 101 during the welding can be clearly distinguished. By setting a direction in which the spacing between two adjacent protrusions 1012 is wider towards the direction perpendicular to the ultrasonic vibration direction, the production efficiency can be improved, and the protrusions 1012 can be firmly welded to the tabs 20211.

In some embodiments of the present disclosure, a length of the protrusion 1012 in the ultrasonic vibration direction is L, and a width of the protrusion 1012 in the direction perpendicular to the ultrasonic vibration direction is d, where L and d satisfy L*2+d*2≥X/4, where X represents a width of each of the tabs 20211. It can be understood that four times a perimeter of the protrusion 1012 should not be less than the width of the tabs 20211. When the four times perimeter of the protrusion 1012 is less than the width of the tabs 20211, an overcurrent contact area is relatively small, and overcurrent capacity is low, resulting in a rapid rise in a temperature and low safety. In this way, the connection strength between the protrusions 1012 and the tabs 20211 can be enhanced. Moreover, the overcurrent area is increased, improving the overcurrent capacity and lowering speed of temperature rising. In addition, the safety performance of the connector 101 is improved.

In some embodiments, L and d may satisfy L*2+d*2≥X/4, L and d may also satisfy L*2+d*2≥X/3, L and d may also satisfy L*2+d*2≥X/2, and L and D may also satisfy L*2+d*2≥X, etc.

In some embodiments, L and d satisfy L*2+d*2≥X/4, where X represents a width of the tab 20211. It can be understood that the perimeter of the protrusion 1012 should not be less than the width of the tab 20211. In this way, the connection strength between the protrusions 1012 and the tabs 20211 is further improved, Moreover, the overcurrent area is further increased, further improving the overcurrent capacity of the connector 101 and lowering speed of temperature rising. In addition, the safety performance of the connector 101 is further improved.

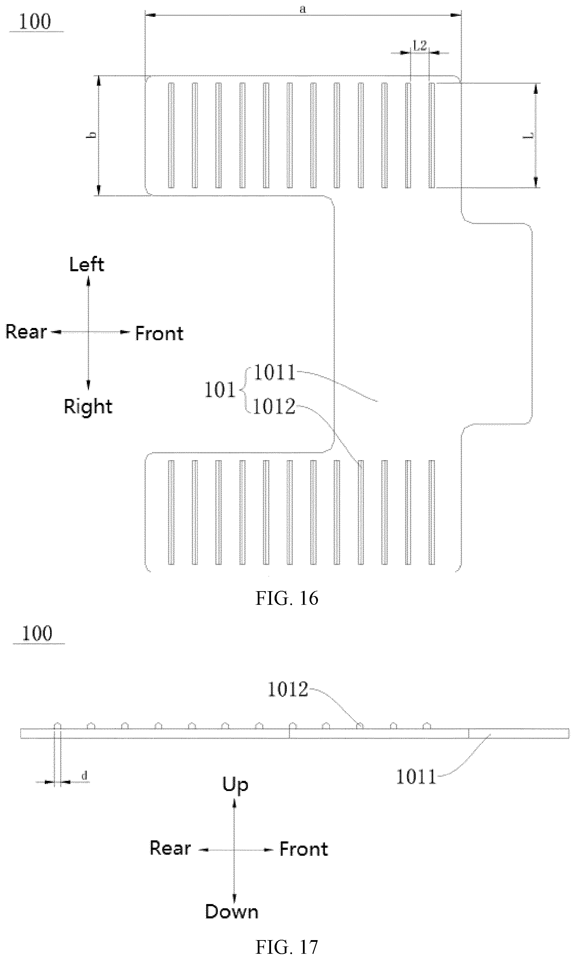

It should be noted herein that the width X of the tab 20211 refers to a length of the tab 20211 perpendicular to the ultrasonic vibration direction. As illustrated in FIG. 16, a length of the tab 20211 in a left-right direction refers to the width of the tab 20211.

A connector 101 according to an exemplary embodiment of the present disclosure will be described below with reference to FIG. 1 to FIG. 28.

Referring to FIG. 16, the protrusion 1012 is formed into an elongated shape. The connector 101 is provided with a connection plate 1011 and a protrusion 1012. The connection plate 1011 is provided with a plurality of protrusions 1012. Each of the plurality of protrusions 1012 protrudes upwards from an upper surface of the connection plate 1011. Each of the plurality of protrusions 1012 is formed into the elongated shape and extends on the upper surface of the connection plate 1011 along a straight line. The plurality of protrusions 1012 extends on the upper surface of the connection plate 1011 in the ultrasonic vibration direction. The connection plate 1011 has a thickness of 0.8 mm, a length a of 80 mm in a front-rear direction of the connection plate 1011, and a length b of 30 mm in a left-right direction of the connection plate 1011. The protrusion 1012 has a length L of 13 mm, a width d of 0.6 mm, and a height of 0.66 mm. A spacing between two adjacent protrusions 1012 is 2.4 mm. The connection plate 1011 and the plurality of protrusions 1012 are integrally formed.

A battery cell 1000 according to one embodiment of the present disclosure includes an electrode plate 2021 and an electrically conductive connection assembly 100. The electrically conductive connection assembly 100 includes the connector 101 according to any one of the above embodiments of the present disclosure.

With the battery cell 1000 according to the embodiment of the present disclosure, by applying the electrically conductive connection assembly 100 provided with the above-mentioned connector 101 to the battery cell 1000, the difficulty of assembling the battery cell 1000 is reduced. Therefore, a manufacturing time of the battery cell 1000 is reduced with the lowered labor cost. Thus, the reliability of the battery cell 1000 is ensured.

A battery pack according to one embodiment of the present disclosure includes the battery cell 1000 according to the above embodiment of the present disclosure.

In the battery pack according to the embodiments of the present disclosure, by arranging the above-mentioned battery cell 1000 according to the above embodiments, safety performance of the battery pack is improved. Therefore, the reliability of the battery pack is ensured to avoid occurrence of danger.

In the description of the present disclosure, it is to be understood that, terms such as "center", "longitudinal", "lateral", "length", "width", "thickness", "over", "below", "front", "back", "left", "right", "vertical", "horizontal", "top", "bottom", "in", "out", "clockwise", "anti-clockwise", "axial", "radial" and "circumference" refer to the directions and location relations which are the directions and location relations shown in the drawings, and for describing the present disclosure and for describing in simple, and which are not intended to indicate or imply that the device or the elements are disposed to locate at the specific directions or are structured and performed in the specific directions, which could not to be understood to the limitation of the present disclosure.

In addition, terms such as "first" and "second" are used herein for purposes of description and are not intended to indicate or imply relative importance or significance. Furthermore, the feature associated with "first" and "second" may include one or more this feature distinctly or implicitly. In the description of the present disclosure, "a plurality of" means two or more than two, unless specified otherwise.

In the present disclosure, unless specified or limited otherwise, the terms "mounted," "connected," "coupled" and "fixed" are understood broadly, such as fixed, detachable mountings, connections and couplings or integrated, and can be mechanical or electrical mountings, connections and couplings, and also can be direct and via media indirect mountings, connections, and couplings, and further can be inner mountings, connections and couplings of two components or interaction relations between two components, which can be understood by those skilled in the art according to the detail embodiment of the present disclosure.

In the description of the present disclosure, reference throughout this specification to "an embodiment," "some embodiments," "an example," "a specific example," or "some examples," means that a particular feature, structure, material, or characteristic described in connection with the embodiment or example is included in at least one embodiment or example of the present disclosure. Thus, the appearances of the phrases in various places throughout this specification are not necessarily referring to the same embodiment or example of the present disclosure. Furthermore, the particular features, structures, materials, or characteristics may be combined in any suitable manner in one or more embodiments or examples. Without a contradiction, the different embodiments or examples and the features of the different embodiments or examples can be combined by those skilled in the art.

Although embodiments of the present disclosure have been illustrated and described, it is conceivable for those of ordinary skill in the art that various changes, modifications, replacements, and variations can be made to these embodiments without departing from the principles and spirit of the present disclosure. The scope of the present disclosure shall be defined by the claims as appended and their equivalents.

## Claims

1. A connector for electrically connecting a plurality of layers of tabs of an electrode plate, the connector comprising:
a connection plate; and
a protrusion arranged at the connection plate,
wherein the protrusion protrudes from a side surface of the connection plate in a thickness direction of the connection plate, and is configured to penetrate the plurality of layers of tabs.

2. The connector according to claim 1, wherein the connection plate is provided with a plurality of protrusions arranged at intervals on the connection plate and penetrating the plurality of layers of tabs.

3. The connector according to claim 2, wherein the connection plate and the plurality of protrusions are integrally formed.

4. The connector according to claim 2, wherein the plurality of protrusions is connected to the connection plate through welding, bonding, plugging or snapping.

5. The connector according to any one of claims 2 to 4, further comprising a protruding plate fixed at the connection plate, the plurality of protrusions being arranged at a side of the protruding plate facing away from the connection plate.

6. The connector according to any one of claims 2 to 4, wherein the plurality of protrusions is arranged at the side surface of the connection plate in a matrix pattern.

7. The connector according to any one of claims 1 to 4, wherein the protrusion extends on the side surface of the connector plate along a straight and/or curved line.

8. The connector according to any one of claims 1 to 7, wherein the protrusion has a width ranging from 0.1 mm to 3 mm.

9. The connector according to any one of claims 1 to 8, wherein the protrusion has a circular, elliptical or polygonal cross section perpendicular to a protruding height.

10. The connector according to any one of claims 1 to 4 and 6 to 9, wherein the protrusion protrudes from the connection plate by a height ranging from 0.1 mm to 3 mm.

11. The connector according to any one of claims 1 to 4 and 6 to 10, wherein the connection plate and the protrusion are made of a same material.

12. The connector according to claim 1, wherein an end of the protrusion away from the connection plate is formed as a piercing end configured to pierce the plurality of layers of tabs.

13. The connector according to claim 12, wherein the protrusion is formed into a conical protrusion having a cone apex angle greater than 5° and less than 150°.

14. The connector according to claim 12, wherein the protrusion is formed into a truncated conical protrusion, a ratio of a radius of a top surface to a radius of a bottom surface of the truncated conical protrusion being less than or equal to 0.6.

15. The connector according to any one of claims 12 to 14, wherein the protrusion extends on the side surface of the connector plate along a straight and/or curved line.

16. The connector according to claim 12 or 15, wherein a cross section of the protrusion perpendicular to an extending direction of the protrusion is formed into a triangular shape, an angle of the piercing end being less than or equal to 120° in the cross section of the protrusion perpendicular to the extending direction.

17. The connector according to claim 12 or 15, wherein a cross section of the protrusion perpendicular to an extending direction of the protrusion is formed into a trapezoidal shape, a ratio of an upper side to a lower side of the cross section of the protrusion perpendicular to the extending direction being less than or equal to 0.6.

18. The connector according to any one of claims 12 to 17, wherein the protrusion comprises a connection segment and a piercing segment connected to the connection segment in a height direction of the protrusion, the connection segment being connected to the connection plate, the piercing segment being connected to an end of the connection segment facing away from the connection plate, the connection segment having a constant cross sectional area in the height direction of the protrusion, and the piercing segment being formed as the piercing end.

19. The connector according to claim 18, wherein the protrusion has a height less than or equal to 5 mm.

20. The connector according to claim 18 or 19, wherein a height of the piercing segment is less than or equal to 2mm in the height direction of the protrusion.

21. The connector according to any one of claims 18 to 20, wherein in the height direction of the protrusion:
a cross sectional area of the piercing segment gradually decreases; and
an apex angle of the piercing segment is less than or equal to 120°.

22. The connector according to any one of claims 18 to 21, wherein a smooth transition is formed between the connection segment and the piercing segment.

23. The connector according to claim 1, wherein the connection plate is provided with a plurality of protrusions arranged on the connection plate at intervals and penetrating the plurality of layers of tabs, a free end surface of the protrusion being formed as a planar surface in a height direction of the protrusion.

24. The connector according to claim 23, wherein the protrusion has a constant cross sectional area in the height direction of the projection.

25. The connector according to claim 23 or 24, wherein the cross sectional area of the protrusion is less than or equal to 5 mm².

26. The connector according to claim 23, wherein the protrusion has a circular, elliptical or polygonal cross section perpendicular to a height of the protrusion.

27. The connector according to claim 26, wherein a ratio of a cross sectional area of the protrusion to the height of the protrusion is less than or equal to 5.

28. The connector according to claim 26, wherein the cross section of the protrusion is formed into the circular shape, and the protrusion has a radius less than or equal to 3 mm.

29. The connector according to claim 26, wherein the cross section of the protrusion is formed into a square shape, and a length of each side of the cross section of the protrusion is less than or equal to 3 mm.

30. The connector according to claim 29, wherein a ratio of the length of each side of the cross section of the protrusion to the height of the protrusion is less than or equal to 1.

31. The connector according to claim 1, wherein:
the connector is configured to be connected to the plurality of layers of tabs through ultrasonic welding; and
the connection plate is provided with a plurality of the protrusions penetrating the plurality of layers of tabs and arranged more densely in an ultrasonic vibration direction than in directions rather than the ultrasonic vibration direction.

32. The connector according to claim 31, wherein a spacing between two adjacent protrusions in the ultrasonic vibration direction is L1, and a spacing between two adjacent protrusions in a direction perpendicular to the ultrasonic vibration direction is L2, where L1 and L2 satisfy 0.5mm≤L1≤10mm, 0.5mm≤L2≤10mm, and L1≤L2.

33. The connector according to claim 31 or 32, wherein the plurality of protrusions extends on the side surface of the connection plate in the ultrasonic vibration direction, and is arranged at intervals in a direction perpendicular to the ultrasonic vibration direction.

34. The connector according to claim 33, wherein the spacing L2 between the two adjacent protrusions in the direction perpendicular to the ultrasonic vibration direction is greater than or equal to a width d of the protrusion.

35. The connector according to claim 33 or 34, wherein a length of the protrusion in the ultrasonic vibration direction is L, and a width of the protrusion in the direction perpendicular to the ultrasonic vibration direction is d, where L and d satisfy L*2+d*2≥X/4, wherein X represents a width of each of the tabs.

36. A battery cell, comprising:
an electrode plate comprising a plurality of tabs stacked together and a current collector; and
an electrically electrically conductive connection assembly comprising the connector according to any one of claims 1 to 35,
wherein the connector is provided with a plurality of protrusions penetrating and electrically connected to the plurality of layers of tabs.

37. The battery cell according to claim 36, wherein the electrode plate comprises:
a support insulation layer; and
a first electrically conductive layer and a second electrically conductive layer that respectively cover two side surfaces of the support insulation layer in a thickness direction of the support insulation layer.

38. A battery pack, comprising the battery cell according to claim 36 or 37.
